# EUROPEAN PATENT SPECIFICATION

(11) **EP 1 972 919 B1**
(45) Date of publication and mention of the grant of the patent: **06.07.2011**
(21) Application number: 08012571.9
(22) Date of filing: 13.05.2004
(51) Int. Cl.: G01N 1/40, B01L 3/00

(54) **Method and apparatus for processing biological and chemical samples**
Vorrichtung und Verfahren zur Verarbeitung von biologischen und chemischen Proben
Procédé et appareil de traitement d'échantillons biologiques et chimiques

(30) Priority: 13.05.2003 US 469986 P; 13.05.2003 US 470021 P; 23.01.2004 US 538913 P; 01.03.2004 US 548922
(43) Date of publication of application: 24.09.2008
(62) Divisional of application: 04011390.4
(73) Proprietor: Becton Dickinson and Company, Franklin Lakes, New Jersey 07417-1880 (US)
(72) Inventor: Chen, Xiaoxi, Westborough, MA 01581 (US); Shanler, Michael, Somerville, MA 02145 (US)
(74) Representative: von Kreisler Selting Werner

(56) References cited:
- EP-A- 1 284 495
- WO-A-01/19520
- WO-A-03/012392
- US-A1- 2001 042 710
- US-A1- 2002 045 270
- US-A1- 2002 094 533
- US-A1- 2002 179 520
- US-B1- 6 315 957

## Description

### Field of Invention

This invention relates to methods and apparatuses for processing biological and chemical samples.

### Background of the Invention

Deposition of biological/chemical samples as small spots on a surface of a solid substrate for subsequent analysis or applications is a useful technique in many fields including mass spectrometry and microarray technology. In microarray applications, small quantities of biological/chemical sample solutions, such as antibody solutions, are deposited on a solid substrate to form a high density array of spots. The contents of the sample solutions, such as antibodies, are immobilized on the substrate surface within an area determined by the size of the spots. The ability of depositing a large number of different samples on a surface in a high density array format is a foundation for microarray applications. In fact, deposition of biological/chemical samples as spots on a sample plate is a key sample preparation step in mass spectrometry applications, including MALDI (Matrix-Assisted Laser Desorption Ionization), SELDI (Surface Enhanced Laser Desorption/Ionization) and DIOS (Desorption/Ionization On porous Silicon) mass spectrometry.

Conventional techniques exist for conducting mass spectrometric analysis of large molecules, e.g., using MALDI plates. Typically with these techniques, liquid solutions (including e.g., peptide, protein and energy absorbing matrix) are initially introduced to predefined target sites on a mass spectrometric plate. Since the diameter of the target sites are generally small and often densely packed, small (e.g., 0.5-2 microliter) droplets of the liquid solutions are disposed onto the plate target sites to achieve proper sample placement and to avoid sample overlap between target sites. Once disposed, the liquid samples are evaporated, with matrix crystal conglomerate containing analyte molecules (e.g., peptides and proteins) remaining on the target sites having favorable characteristics for mass spectrometric analysis. Where larger conglomerate samples are desired, serial liquid sample placement and evaporation has been used to iteratively build-up a conglomerate.

WO03/012392 discloses a method for processing chemical and biological liquid samples that are to be collected at collection sites on a target device, comprising releasably securing a target support plate to the target device.

In US2002/0094533 plates are stacked to provide a composite structure and discloses a method using evaporation for concentration of the liquid samples.

US2002/0045270 and EP1284495 both disclose a platen for MALDI-TOF preparation where the sample spots are dried in a plate.

Since mass spectrometric plates are generally flat, various techniques have been developed for attracting and/or maintaining the liquid samples at the plate target sites. For example, MALDI plates have been formed with a hydrophobic masking (e.g., polytetrafluoroethylene) over a hydrophilic substrate with the target sites being exposed. In addition, MALDI plates have been formed with etched features which define wells encompassing the target sites with the liquid samples being maintained therein due to surface tension. The approaches are still limited by the small volume (5-10 microliters) of the liquid solutions that can be disposed onto the plate target sites to achieve proper sample placement and to avoid sample overlap between target sites.

Separately, multi-well filter plates with a small chromatography column incorporated at the bottom of each well have been known to be used for sample preparation in mass spectrometry. One typical example of a multi-well filter plate is commercialized under the brand name ZipPlate®. Using the ZipPlate device, the processed samples are pulled through the chromatography columns and directly deposited on a MALDI plate using a vacuum system.

Because the processed samples coming from the wells necessarily travel in the air for a small distance before it reaches the MALDI plate surface, a delicate design is required to ensure that the sample solutions coming out of the neighboring wells do not contaminate each other when being deposited on the plate surface. Also, because air leakage in one well may result in reduced air pressure in other wells, a delicate design is required to ensure that the air pressure applied on each sample is consistent from well to well.

The aforedescribed prior art multi-well plates suffer drawbacks including being formed of rigid plastic (e.g., polystyrene or polypropylene) and failing to have the ability to couple to the MALDI target plate to allow for centrifugation therewith.

### Summary of the Invention

The subject invention concerns a method for processing chemical and biogical samples as defined in claim 1.

### Brief Description of the Drawings

FIGS. 1(a)-1(d) show various column configurations of a target support plate;

FIGS. 2 and 3 show an assembly of a target support plate and a target device;

FIGS. 4 and 5 show a target support plate having a recessed section defined to accommodate a target device;

FIG. 6 shows a cross-section of a target support plate/target device assembly, wherein a mechanical fixation is used to releasably secure the target device to the target support plate;

FIG. 7 is an enlarged view of section 7 from FIG. 6;

FIG. 8 is a partial cross-section of a target support plate/target device assembly wherein, adhesive is used to releasably secure the target device to the target support plate;

FIG. 9 is a partial cross-section of a target support plate/target device assembly wherein an elastomeric gasket is used to releasably secure the target device to the target support plate;

FIG. 10 shows a schematic of a process used to prepare a target device for analysis, wherein the target device is a mass spectrometric plate (e.g., a MALDI plate);

FIG. 11 shows an assembly of a target support plate and a target device, wherein the target support plate includes a filter and filtration media and the target device is a multi-well plate;

FIG. 12 shows an assembly of a first target support plate, having a filter and filtration media disposed therein, a secondary target support plate, and a target device in the form of a mass spectrometric plate (e.g., a MALDI plate) releasably secured to the secondary target support plate;

FIG. 13 shows a schematic of a process for preparing a target device for analysis using the assembly of FIG. 12, wherein the target device is a mass spectrometric plate (e.g., a MALDI plate); and,

FIG. 14 shows a variation of the process of FIG. 13, wherein the sample for analysis may be purified.

### Detailed Description of the Invention

Various configurations of a target support plate are shown and described herein. Advantageously, with the subject invention, a target device (e.g., a multi-well plate, a sample plate for mass spectrometry, a secondary target support plate) is releasably secured to the target support plate to allow for chemical and biological samples to be prepared therewith. Samples can be efficiently transmitted to a target device having been filtered or processed, and may be transmitted without requiring pipetting, or other transference, thereby minimizing cross-contamination.

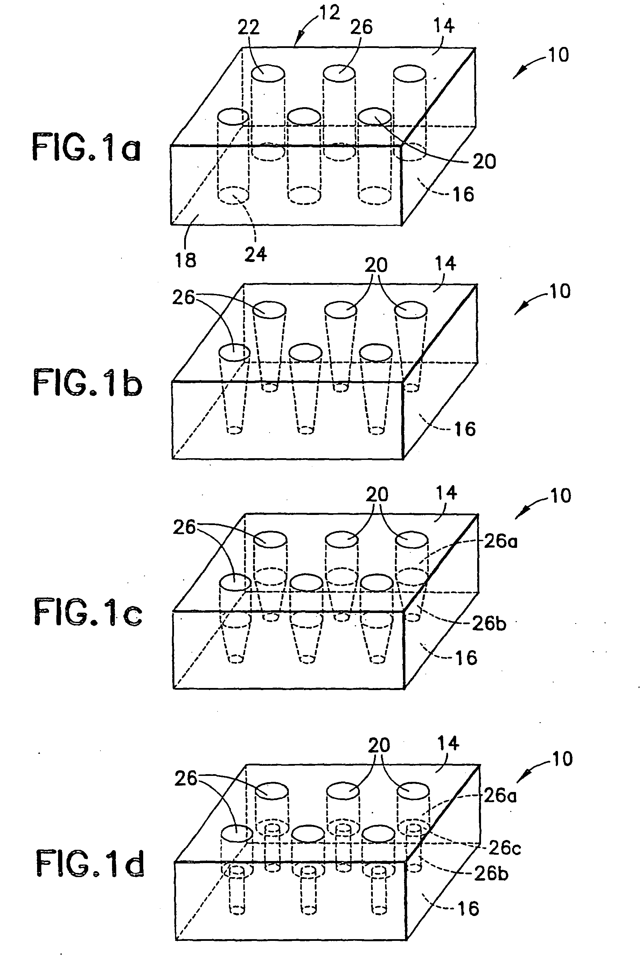

More specifically, and with reference to FIGS. 1(a)-(d), various configurations of a target support plate **10** are shown having a body **12** with top and bottom surfaces **14** and **16,** and a plurality of sidewalls **18.** One or more columns **20** extend between, and through, the top and bottom surfaces **14** and **16.** Consequently, the columns **20** each include an open top end **22,** that is coextensive with the top surface **14,** and an open bottom end **24,** that is coextensive with the bottom surface **16.** As is readily appreciated, the columns **20** define open passages completely through the body **12.** The body **12** may be formed of any conventional material used to form multi-well plates, such as polypropylene or polystyrene, unless described to the contrary. Preferably, at least a portion of the bottom surface **16** is formed flat. The bottom surface **16,** having the open bottom ends **24** formed therethrough, must be configured to provide sufficient surface area for sealing and preventing cross-contamination, as described below (i.e., sufficient surface area is to be provided at intervals between the open bottom ends **24).**

Any number of the columns **20** may be utilized. In addition, the columns **20** can be arranged in any pattern in the body **12,** including being arranged in known arrays used commonly with multi-well plates (e.g., arrays of 96 columns (12 x 8), 384 columns (16 x 24), 1,536 columns (32 x 48), or other multiples of 12).

Each of the columns **20** includes a column sidewall **26** which may be formed with various geometric configurations. For example, as shown in FIG. 1(a), the column sidewalls **26** may be generally cylindrical. Alternatively, as shown in FIG. 1(b), the column sidewalls **26** may by frusto-conical. Preferably, where a frusto-conical configuration is used, the columns **20** are formed to converge towards the bottom surface **16.** Furthermore, the column sidewalls **26** may be formed with non-constant geometric configurations or of combined geometric configurations, such as in FIG. 1(c), where the column sidewall **26** includes a first column sidewall portion **26a** that is cylindrical and a second column sidewall portion **26b** that is frusto-conical. The first and second column sidewall portions **26a** and **26b** may also be both cylindrical, but of different diameters, such that, as shown in FIG. 1(d), an annular intermediate surface **26c** is defined at the intersection of the two sidewall portions **26a** and **26b.** The intermediate surface **26c** may provide a support surface for a frit or filter, which in turn may support a filtration media, as further described below. As will be appreciated by those skilled in the art, the column sidewalls **26** may be formed with other configurations.

Depending on the use of the target support plate **10,** the column sidewalls **26** may be treated to enhance the performance of sample preparation, such as, for example, enhancing the detection sensitivity in preparing samples for mass spectrometry. The column sidewalls **26** can be modified to provide reactivity or affinity for certain biological/chemical samples. In another example, the column sidewalls **26** can be modified to minimize non-specific binding of various biological/chemical substances such as proteins/peptides. This approach may aid in avoiding sample loss to the column sidewalls **26.** In yet another example, the column sidewalls **26** can be modified to specifically bind a class of biological/chemical substances such as a particular class of proteins/peptides/nucleotides or a species of small-molecules. This approach is useful where the partial or entire removal of a class of biological/chemical substances from the original liquid sample mixture is desired. In mass spectrometry applications, e.g., MALDI, this approach will be useful where the partial removal of some components will decrease the background of the mass spectrometry and increase the sensitivity of detection for other components.

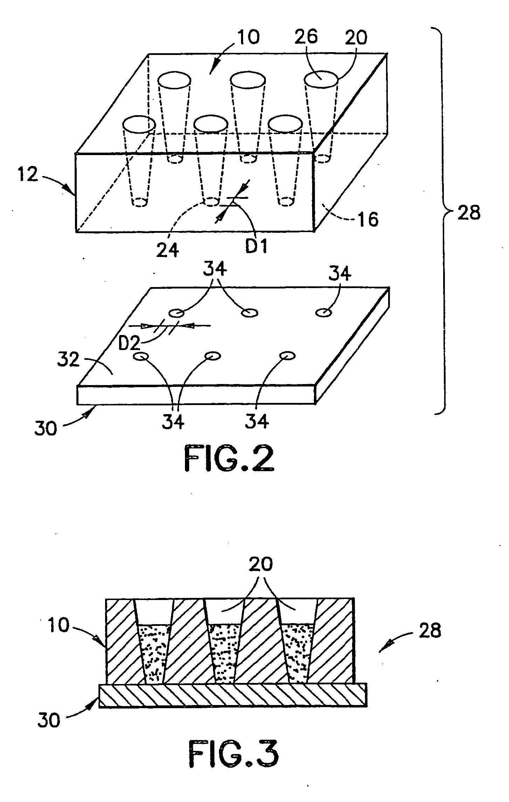

With reference to FIGS. 2 and 3, an assembly **28** may be provided of the target support plate **10** and a target device **30.** The target support plate **10** is formed to be releasably secured to the target device **30.** The target device **30** may be any device for collecting samples, including a multi-well plate, a mass spectrometric plate, or a secondary target support plate.

The target device **30** includes an upper surface **32** which faces the bottom surface **16** of the target support plate **10** with the assembly **28** being assembled. To provide sufficient surface area for sealing, it is preferred that at least a portion of the upper surface **32** be formed flat. In a first variation of the subject invention, at least the bottom surface **16** of the target support plate **10** is formed of an elastomeric material which can be releasably secured to the upper surface **32** of the target device **30.** It is preferred that the elastomeric material include a silicon polymer, and more preferably, include poly(dimethyl)siloxane (PDMS). The elastomeric material may also be doped with other polymers to customize its physical properties. With an elastomeric material, van der Waals interactions between the surface molecules of the target support plate **10** and the target device **30** provide for a releasable securement. The target support plate **10** can be pressed onto the target device **30** for securement and removed therefrom by peeling. It is further preferred that the body **12** of the target support plate **10** be wholly formed of the elastomeric material, more preferably being wholly formed of PDMS. The elastomeric and hydrophobic natures of PDMS allow for a tight bond to be formed between the target support plate **10** and the target device **30.** With the target support plate **10** being only partially formed of the elastomeric material, remaining portions may be formed of rigid plastic or other material which will impart favorable characteristics to the column sidewalls **26.**

The target device **30** includes one or more collection sites **34** for collecting biological and chemical samples that are to be processed as described below. The collection sites **34** may be individual wells of a multi-well plate, target sites on a mass spectrometric plate, or columns of a secondary target support plate. It is preferred that the columns **20** be provided in such quantity and be arranged to preferably register with the collection sites **34** in a one-to-one correspondence, although such correspondence is not required. It is also preferred that the bottom ends **24** of the columns **20** each define a diameter D 1 that is equal to, or greater than, the size D2 of the collection sites **34.** In this manner, liquid samples disposed within the columns **20** will cover the respective entireties of the collection sites **34.** Where desired, the diameter D1 can be made less than the size D2.

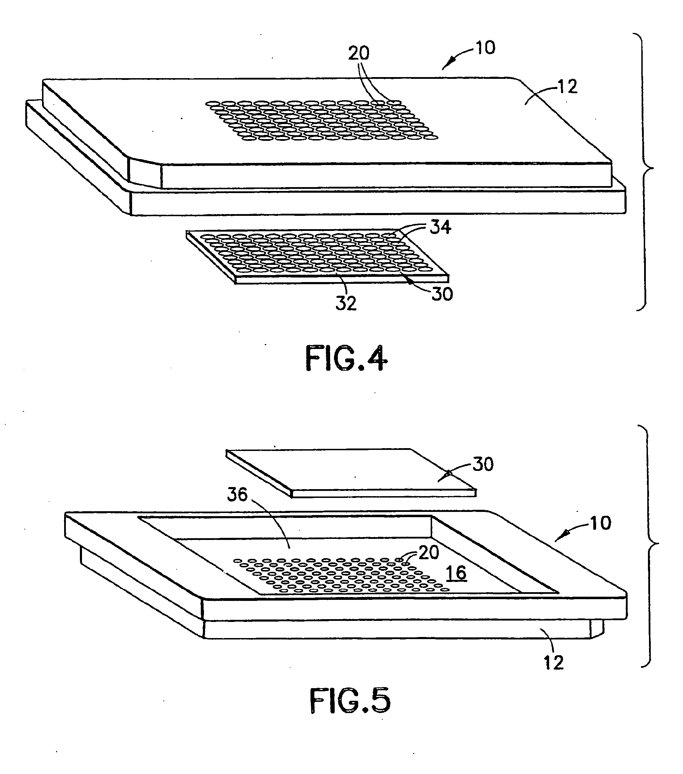

The target support plate **10** can be formed of various sizes and configurations. To allow for the target support plate **10** to be used with common pick-and-place machines and other standard multi-well plate equipment, the target support plate **10** can be formed with the same footprint as a common multi-well plate (e.g., such as the footprint specified in the standards of the Society for Biomolecular Screening (Standards SBS-1 through SBS-5)). In addition, as shown in FIGS. 4 and 5, the target support plate **10** may be formed larger than the target device **30.** The bottom surface **16** may be recessed, as best shown in FIG. 5, with a recessed section **36** being defined in which the target device **30** may be wholly accommodated without protruding from the footprint of the body **12.**

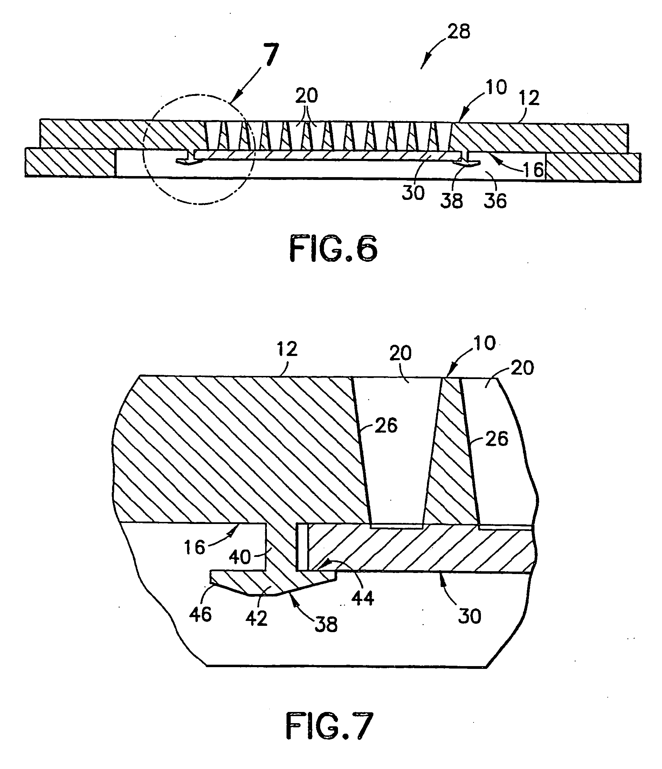

In addition to relying on elastomeric sealing to provide a releasable securement between the target support plate **10** and the target device **30,** other releasable securement configurations may be utilized. With reference to FIGS. 6 and 7, a mechanical fixation is disclosed, wherein a mechanical locking member **38** may be provided which protrudes from the bottom surface **16** to at least partially bound the target device **30.** The locking member **38** includes an upstanding support member **40** and a transverse member **42.** The upstanding support member **40** and the transverse member **42** are formed such that a portion of the target device **30** is interposed between an engagement surface **44,** defined on the transverse member **42,** and the bottom surface **16.** The transverse member **42** may also include a rearwardly, extending protruding member **46.** The target device **30** can be "snapped" into releasable securement with the locking member **38** deflecting and returning to the position shown in FIGS. 6 and 7. Removal of the target device can be achieved by rearward displacement of the protruding member **46** resulting in moment being applied about the upstanding support member **40,** deflection of the locking member **38,** and separation of the engagement surface **44** from the target device **30.** As can be appreciated, the strength of the holding force applied to the target device **30,** as well as the difficulty of securement and removal of the target device **30,** will be a function of the strength of the locking member **38,** and the extent to which the locking member **38** bounds the target device **30.**

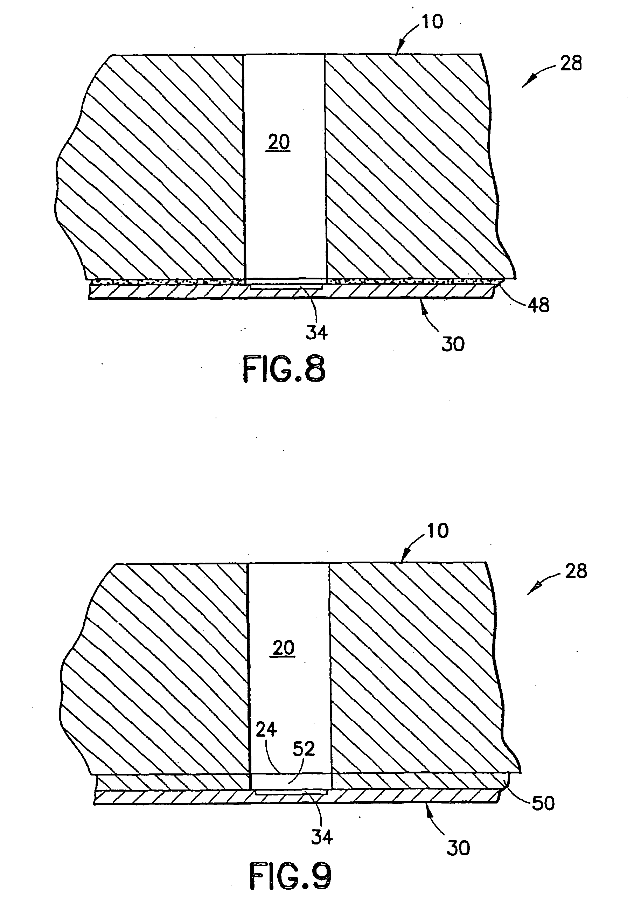

As shown in FIG. 8, adhesive **48** may be used to releasably secure the target device **30** to the target support plate **10.** Any suitable adhesive may be used which will allow for release of the target support plate **10,** yet provide sufficient holding force to the target support plate **10** to allow for preparation of the collection sites **34.**

As shown in FIG. 9, an elastomeric gasket **50** may be interposed between the target device **30** and the target support plate **10** to provide releasable securement therebetween. In the same manner as described above with the body **12** of the target support plate **10** being formed of an elastomeric material, the elastomeric gasket **50** provides releasable adhesion. This adhesion may be achieved by van der Waals interactions. Preferably, the elastomeric material of the gasket **50** includes silicon polymer, and more preferably, includes poly(dimethyl)siloxane (PDMS). The elastomeric material may also be doped with other polymers to customize its physical properties. It is further preferred that the elastomeric gasket **50** be wholly formed of PDMS. Apertures **52** shall be formed in the gasket **50** as required to expose the intended collections sites **34.** It is preferred that the apertures **52** each have a diameter that is greater than, or equal to, that of the respective open bottom ends **24.**

As will be understood by those skilled in the art, regardless of the manner by which releasable securement is achieved, it is desired that sufficient sealing be provided along the interface between the target support plate **10** and the target device **30** to prevent cross-contamination of any liquid samples contained in the columns **20.** The sealing should be at least fluid-tight. In addition, the level of strength of the releasable securement must be considered in view of any processing steps the assembly **28** is to be subjected to. Adhesive and elastomeric sealing will generally provide a weaker holding force than a mechanical fixation and may be used with smaller volume liquid samples and/or lighter target devices; whereas, a mechanical fixation may be used with larger liquid samples and/or heavier target devices. This is particularly so where the assembly **28** is intended to be centrifuged or otherwise transported together with releasable securement being maintained. On the other hand, the target device **30** should be detached without damage thereto. The various forms of releasable securement can be used in varying combinations (for example, adhesive may be used in combination with mechanical fixation).

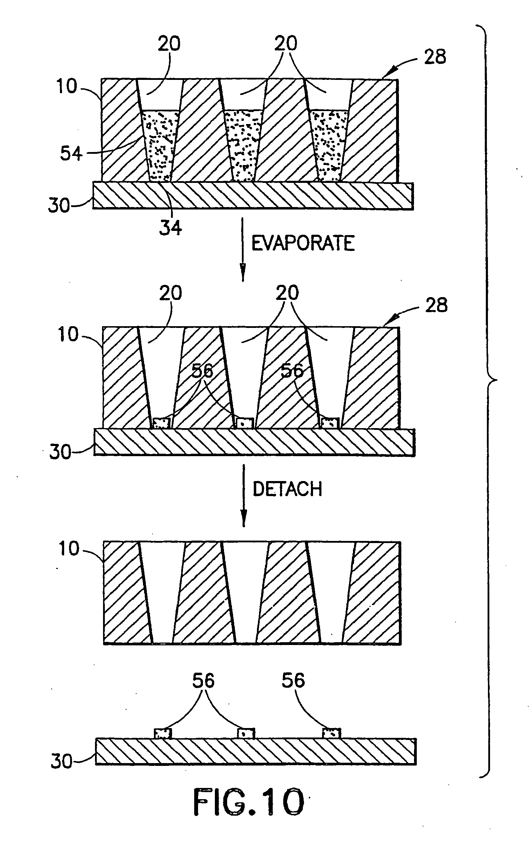

With reference to FIG. 10, an exemplary process is shown therein for preparing a chemical or biological sample for analysis. In particular, the assembly **28** is prepared, wherein the target support plate **10** is releasably secured to the target device **30** using any of the aforementioned techniques. As shown in FIG. 10, the target device **30** may be a mass spectrometric plate, such as a MALDI plate, a SELDI plate, or a DIOS plate. Once the assembly **28** is prepared, liquid samples **54** (which may contain an energy absorbing matrix such as α-cyano-4-hydroxy cinnamic acid, 3, 5-dimethoxy-4-hydroxy cinnamic acid, or 2, 5-dihydroxybenzoic acid) are disposed in the columns **20.** The columns **20** define fluid-collecting wells collectively with the target device **30,** particularly with the collection sites **34** which are in registration with the columns **20.** The liquid samples **54** are caused to evaporate, such as through bench evaporation or evaporative centrifugation. After the liquid is evaporated from the liquid samples **54,** conglomerates **56** are left on the collection sites **34** suitable for further analysis. The target device **30** is released from the target support plate **10** to allow for any such further analysis.

For the preparation of mass spectrometry, the column sidewalls **26** may be pre-coated with matrix molecules and/or mass spectrometry standards that are re-suspended upon addition of the liquid samples **54.** The matrix and/or standards will be found in the conglomerates **56** after evaporation.

Advantageously, the subject invention allows for much larger liquid sample volumes to be used in preparing samples for mass spectrometry analysis, than with prior art techniques. Volumes of the liquid samples **54** may be in the range of 100 to 200 microliters, as opposed to the 1-5 microliters used in the prior art. As such, much greater material concentration in the conglomerate **56** can be achieved than with the prior art. In particular, with reference to the mass balance principle, the product of a first concentration (C1) and a first volume (V1) of a liquid sample equals the product of a second concentration (C2) and a second volume (V2) of the same liquid sample. The liquid samples **54** each have an initial first concentration C1, and an initial first volume V1. Because of evaporation, the resulting volume V2 of the liquid samples **54** is greatly reduced as compared to the initial volume V1. As such, the resulting concentration C2 of the resulting volume V2 is greater than the initial concentration C1, due to the volume reduction Although the subject invention is particularly well-suited for use with a MALDI plate, other target plates, including those not intended for mass spectrometry, may be utilized with the subject invention, such as a glass slide for preparation of multiple isolated samples.

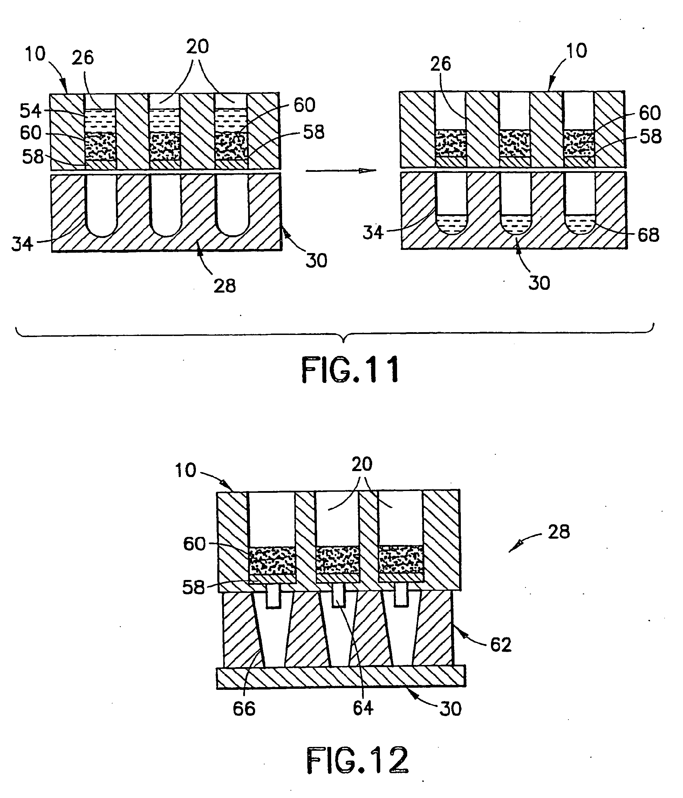

With reference to FIG. 11, the assembly **28** may also be used to allow for liquid sample filtration. The assembly **28** is prepared in any manner described above. FIG. 11 shows the target device **30** as a multi-well plate. Here, at least a portion of the columns **20** of the target support plate **10** are each provided with a frit or filter **58** with filtration media **60,** such as chromatography media (e.g., C18 media), being optionally disposed atop the filter **58,** as is known in the art. The filtration media **60** may be such that it is capable of retaining a particular class of biological/chemical substances (e.g., proteins/peptides/nucleotides) or a species of small-molecules having a certain physical or chemical property. Optionally, the column sidewalls **26** may be modified by attaching ligands thereto to facilitate filtration. Liquid samples **54** that are to be filtered are disposed in the columns **20,** with subsequent centrifuge resulting in the samples **54** being forced through the filtration media **60** and the filter **58** to collect in the collection sites **34** of the target device **30.** Filtered solution **68** can then be transferred for further analysis. Filtering can be desired to remove some components in decreasing the background of the mass spectrometry and increasing the sensitivity for detection for other components. For example, a liquid sample is commonly desalted for the MALDI process. Likewise, depletion of high abundant proteins (e.g., albumin and immunoglobin) in human plasma and human serum may be desired to increase detection sensitivity of low abundant proteins.

With reference to FIG. 12, the assembly **28** can be prepared such that the target support plate **10** is releasably secured to a secondary target support plate **62** which, in turn, is releasably secured to the target device **30,** such as a mass spectrometric plate. As will be appreciated by those skilled in the art, although it is not envisioned that more than two of the target support plates **10** and **62** are to be used together in forming the assembly **28,** the possibility of such an assembly does exist. With the assembly of FIG. 12, the target support plate **10** can be provided with the filter **58** and the filtration media **60** as described above. Exit columns **64** may be optionally provided on the target support plate **10** to channel filtered liquid into secondary collection sites **66** of the secondary target support plate **62.** The secondary collection sites **66** collectively define fluid-collecting wells with the target device **30.**

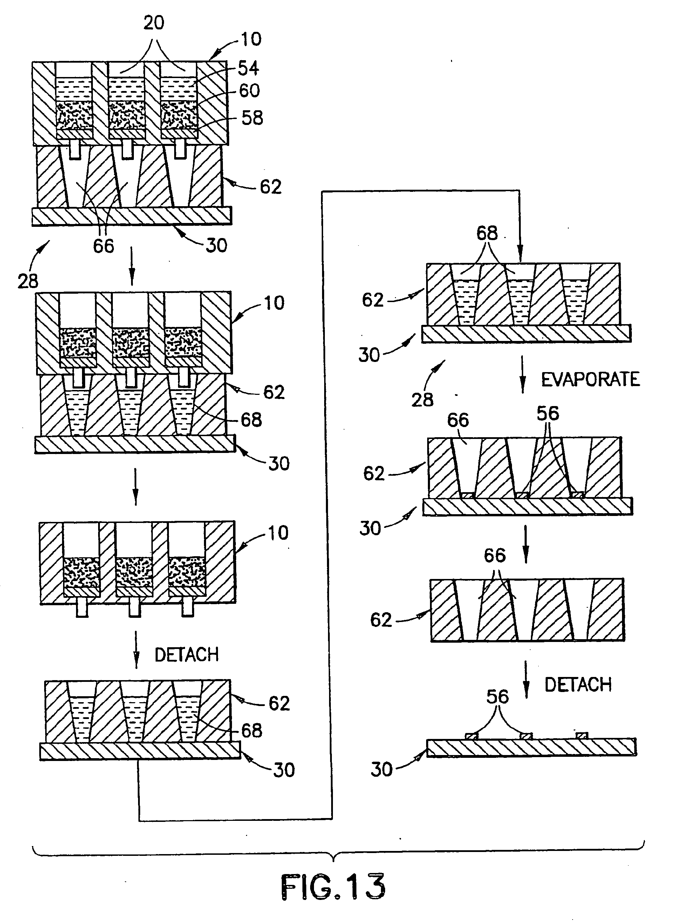

As shown in FIG. 13, the assembly of FIG. 12 can be used to prepare chemical or biological samples for analysis, wherein liquid samples **54** may be initially filtered under centrifuge and collected in the secondary collection sites **66** of the secondary target support plate **62.** Thereafter, the target support plate **10** can be detached from the secondary target support plate **62.** Filtered liquid **68** collected in the secondary collection sites **66** may then be evaporated to form the conglomerates **56** on the collection sites **34** of the target device **30.** Finally, the secondary target support plate **62** may be detached from the target device **30** to allow for analysis of the conglomerates **56.**

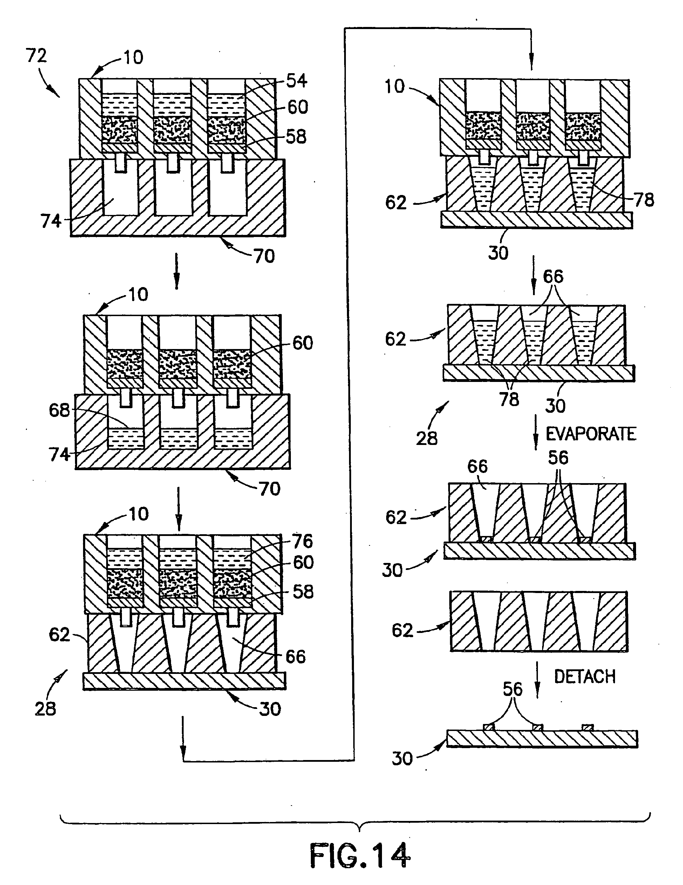

With reference to FIG. 14, and as a variation to the process of FIG. 13, a purification process can be practiced using the subject invention. Initially, the target support plate **10** is releasably secured to a multi-well plate **70** in forming an initial filtering assembly **72** in accordance with any manner described above. Liquid samples **54** are filtered under centrifuge through the filtration media **60** to force waste liquid **68** into collection sites **74** of the multi-well plate **70.** Material of interest is, however, retained in the filtration media **60.** Washing buffers (not shown) can be flowed through the filtration media **60** to disassociate and wash away components that are non-specifically bound in the filtration media **60.** After washing, the target support plate **60** is detached from the multi-well plate **70** and attached to the secondary target support plate **62** in forming the assembly of FIG. 12. Elution buffers **76** (e.g., organic solvents, such as acetonitrile or methanol) are then flowed through the filtration media **60** by centrifuge. The material of interest bound in the filtration media **60** is eluted into the secondary collection sites **66** of the secondary target support plate **62.** The target support plate **10** is thereafter separated from the secondary target support plate **62.** Eluted liquid **78** collected in the secondary target support plate **62** is caused to evaporate leaving conglomerates **56** collected on the collection sites **34** of the target device **30.** To allow for analysis, the secondary target support plate **62** is separated from the target device **30.**

This method is useful when deposition of a purified sample is desired. For example, reverse phase resins, such as C18, may be used to purify protein/peptide samples before deposition as the conglomerates **56.** Other affinity matrices can also be used as the filtration media **60,** such as immobilized metal ion affinity chromatography (IMAC) matrices for phosphorylated peptides/proteins or poly(histidine) fused peptides/proteins, biotin affinity matrices for biotinylated peptide/proteins, and thiol-disulfide exchange chromatography matrices for glutathione S-transferase (GST) fused peptides/proteins.

As will be recognized by those skilled in the art; air and/or liquid-tight seals may be provided on the top surface **14** of the target support plate **10** so that the target support plate **10,** with the target device **30** being supported thereby, may be used for storage and/or assay purposes. Portions of the target support plate **10** can also be prepared for affinity capture or depletion (through coating, a membrane, or preparation of the constituent resin with suitable agents). Ligands and/or proteins may also be deposited in the target support plate **10** prior to introduction of the liquid samples **54.**

The subject invention provides several advantages over the prior art. For example, larger liquid samples can be provide at collection sites, which when evaporated, provide larger mass depositions for analysis. Also, certain organic solvents (e.g., acetone) which have been difficult to use with prior art devices, due to poor containment, can be utilized with the subject invention and properly contained within the columns of the target support plate without leakage. Further, the open bottom ends of the target support plate can be used to define the size of the resulting conglomerates, thereby avoiding inconsistent or improperly-sized formations.

Various changes and modifications can be made in the present invention. It is intended that all such changes and modifications come within the scope of the invention as set forth in the following claims.

## Claims

1. A method for processing chemical and biological liquid samples (54) that are to be collected at collection sites (34) on a target device (30), said method comprising:
releasably securing a target support plate (10) to the target device (30) by pressing an elastomeric portion of said target support plate (10) into contact with the target device (30) or by interposing an elastomeric gasket (50) between said target support plate (10) and the target device (30), said target support plate (10) having spaced-apart top and bottom surfaces (14, 16), a plurality of columns (20) extending between, and through, said top and bottom surfaces (14, 16), wherein said target support plate (10) is releasably secured to the target device (30) such that said columns (20) at least partially register with the collection sites (34) of the target device (30);
depositing the liquid samples (54) in at least a portion of said columns (20);
releasing the target device (30) from said target support plate (10) with said conglomerates (56) at the collection sites (34), **characterised by** evaporate centrifuging the deposited liquid samples (54) so as to form conglomerates (56) at the collection sites (34).

2. A method as in claim 1, wherein said releasably securing includes adhering said target support plate (10) to the target device (30) with adhesive (48).

3. A method as in claim 1, wherein the target device (30) is a multi-well plate, preferably a mass spectrometry plate.

4. A method as in claim 1, wherein the target device (30) is a secondary target support plate having spaced-apart top and bottom surfaces, a plurality of columns extending between, and through, said top and bottom surfaces, said columns of said secondary target support plate defining the collection sites (34).

5. A method as in claim 1, wherein said releasably securing includes defining at least fluid-tight seals between said target support plate (10) and the target device (30) at locations between the collection sites (34) so as to prevent cross-contamination between the collection sites (34).

6. A method as in claim 1, wherein said target support plate (10) is wholly formed of an elastomeric material.

7. A method as in claims 1 or 6, wherein said elastomeric material includes a silicon polymer, preferably poly(dimethyl)siloxane.

8. A method as in claim 1, wherein at least a portion of said columns (20) is each formed with a cylindrical shape, with a frusto-conical shape, to converge towards said bottom surface (16), and/or with non-constant cross-sections.

9. A method as in claim 1, wherein said bottom surface (16) of said target support plate (10) is recessed.

10. A method as in claim 9, wherein said bottom surface (16) partially defines a recessed section defined within said target support plate (10), said recessed section (36) being defined to accommodate said target device (30) within a footprint of said target support plate (10).

11. A method as in claim 3, wherein said mass spectrometry is for a purpose selected from the group consisting of MALDI (Matrix-Assisted Laser Desorption Ionization) mass spectrometry, SELDI (Surface Enhanced Laser Desorption/Ionization) mass spectrometry, and DIOS (Desorption/Ionization On porous Silicon) mass spectrometry.

12. A method as in claim 1, wherein at least a portion of said columns (20) is each provided with a filter (58), with a filtration media (60), is modified chemically, is modified to provide reactivity for certain biological/chemical molecules, is modified by physical attachment of biological/chemical entities thereto, is modified to minimize nonspecific binding of various biological /chemical substances, and/or is modified to specifically bind a class of biological/chemical substances.

## Patentansprüche

1. Verfahren zur Verarbeitung von chemischen und biologischen flüssigen Proben (54), die an Sammelstellen (34) an einer Zielvorrichtung (30) zu sammeln sind, wobei das Verfahren Folgendes umfasst:
lösbares Befestigen einer Zielträgerplatte (10) an der Zielvorrichtung (30) durch Drücken eines elastomeren Teils der Zielträgerplatte (10) in Kontakt mit der Zielvorrichtung (30) oder durch Einfügen eines elastomeren Dichtungsrings (50) zwischen der Zielträgerplatte (10) und der Zielvorrichtung (30), wobei die Zielträgerplatte (10) eine obere und eine untere Fläche (14, 16), die sich in einem Abstand voneinander befinden, eine Vielzahl von Säulen (20), die sich dazwischen sowie durch die obere und die untere Fläche (14, 16) hindurch erstrecken, wobei die Zielträgerplatte (10) lösbar an der Zielvorrichtung (30) befestigt ist, so dass die Säulen (20) wenigstens teilweise mit den Sammelstellen (34) der Zielvorrichtung (30) in Deckung kommen;
Absetzen der flüssigen Proben (54) in wenigstens einen Teil der Säulen (20);
Lösen der Zielvorrichtung (30) von der Zielträgerplatte (10) mit den Konglomeraten (56) an den Sammelstellen (34), **gekennzeichnet durch**
Zentrifugieren/Verdampfen der abgesetzten flüssigen Proben (54) unter Bildung von Konglomeraten (56) an den Sammelstellen (34).

2. Verfahren gemäß Anspruch 1, wobei das lösbare Befestigen das Anheften der Zielträgerplatte (10) an die Zielvorrichtung (30) mit Kleber (48) umfasst.

3. Verfahren gemäß Anspruch 1, wobei die Zielvorrichtung (30) eine Multiwellplatte, vorzugsweise eine Massenspektrometrieplatte, ist.

4. Verfahren gemäß Anspruch 1, wobei die Zielvorrichtung (30) eine sekundäre Zielträgerplatte mit einer oberen und einer unteren Fläche, die sich in einem Abstand voneinander befinden, und einer Vielzahl von Säulen, die sich dazwischen sowie durch die obere und die untere Fläche hindurch erstrecken, ist, wobei die Säulen der sekundären Zielträgerplatte die Sammelstellen (34) definieren.

5. Verfahren gemäß Anspruch 1, wobei das lösbare Befestigen das Definieren von wenigstens flüssigkeitsdichten Dichtungen zwischen der Zielträgerplatte (10) und der Zielvorrichtung (30) an Orten zwischen den Sammelstellen (34) umfasst, um eine Kreuzkontamination zwischen den Sammelstellen (34) zu verhindern.

6. Verfahren gemäß Anspruch 1, wobei die Zielträgerplatte (10) ganz aus einem elastomeren Material gebildet ist.

7. Verfahren gemäß Anspruch 1 oder 6, wobei das elastomere Material ein Siliciumpolymer, vorzugsweise Polydimethylsiloxan, umfasst.

8. Verfahren gemäß Anspruch 1, wobei wenigstens ein Teil der Säulen (20) jeweils mit einer Zylinderform, Kegelstumpfform, zu der unteren Fläche (16) zusammenlaufend und/oder mit nichtkonstanten Querschnitten gebildet ist.

9. Verfahren gemäß Anspruch 1, wobei die untere Fläche (16) der Zielträgerplatte (10) eine Aussparung aufweist.

10. Verfahren gemäß Anspruch 9, wobei die untere Fläche (16) teilweise einen ausgesparten Abschnitt definiert, der innerhalb der Zielträgerplatte (10) definiert ist, wobei der ausgesparte Abschnitt (36) so definiert ist, dass die Zielvorrichtung (30) innerhalb einer Aufstandsfläche der Zielträgerplatte (10) untergebracht ist.

11. Verfahren gemäß Anspruch 3, wobei die Massenspektrometrie einem Zweck dient, der aus der Gruppe ausgewählt ist, die aus MALDI(matrix-assisted laser desorption ionization)-Massenspektrometrie, SELDI(surface enhanced laser desorption/ionization)-Massenspektrometrie und DIOS(desorption/ionization on porous silicon)-Massenspektrometrie besteht.

12. Verfahren gemäß Anspruch 1, wobei wenigstens ein Teil der Säulen (20) jeweils mit einem Filter (58) mit einem Filtermedium (60) versehen ist, chemisch modifiziert ist, so modifiziert ist, dass es Reaktivität gegenüber bestimmten biologischen/chemischen Molekülen aufweist, durch physikalische Befestigung von biologischen/chemischen Entitäten modifiziert ist, so modifiziert ist, dass die unspezifische Bindung verschiedener biologischer/chemischer Substanzen minimiert wird, und/oder so modifiziert ist, dass eine Klasse von biologischen/chemischen Substanzen spezifisch gebunden wird.

## Revendications

1. Procédé de traitement d'échantillons liquides chimiques et biologiques (54) qui doivent être collectés au niveau de sites de collecte (34) sur un dispositif cible (30), ledit procédé comprenant les étapes consistant à :
fixer de façon libérable une plaque de support cible (10) au dispositif cible (30) en pressant une portion élastomère de ladite plaque de support cible (10) en contact avec le dispositif cible (30) ou en interposant un joint élastomère (50) entre ladite plaque de support cible (10) et le dispositif cible (30), ladite plaque de support cible (10) comportant des surfaces supérieure et inférieure espacées (14, 16), une pluralité de colonnes (20) s'étendant entre et à travers lesdites surfaces supérieure et inférieure (14, 16), où ladite plaque de support cible (10) est fixée de façon libérable au dispositif cible (30) de telle sorte que lesdites colonnes (20) coïncident au moins partiellement avec le système de collecte (34) du dispositif cible (30) ;
déposer les échantillons liquides (54) dans au moins une partie desdites colonnes (20) ;
libérer le dispositif cible (30) de ladite plaque de support cible (10) avec lesdits conglomérats (56) au niveau des sites de collecte (34), **caractérisé par** l'étape consistant à
évaporer par centrifugation les échantillons liquides (54) déposés de façon à former des conglomérats (56) au niveau des sites de collecte (34).

2. Procédé selon la revendication 1, dans lequel ladite fixation libérable inclut le fait de faire adhérer ladite plaque de support cible (10) au dispositif cible (30) avec un adhésif (48).

3. Procédé selon la revendication 1, dans lequel le dispositif cible (30) est une plaque multipuits, de préférence une plaque de spectrométrie de masse,

4. Procédé selon la revendication 1, dans lequel le dispositif cible (30) est une plaque de support cible secondaire comportant des surfaces supérieure et inférieure espacées, une pluralité de colonnes s'étendant entre et à travers lesdites surfaces supérieure et inférieure, lesdites colonnes de ladite plaque de support cible secondaire définissant les sites de collecte (34).

5. Procédé selon la revendication 1, dans lequel ladite fixation libérable inclut la définition d'au moins des joints étanches aux fluides entre ladite plaque de support cible (10) et le dispositif cible (30) à des emplacements entre les sites de collecte (34) de façon à empêcher une contamination croisée entre les sites de collecte (34).

6. Procédé selon la revendication 1, dans lequel ladite plaque de support (10) est entièrement formée d'un matériau élastomère.

7. Procédé selon les revendications 1 ou 6, dans lequel ledit matériau élastomère inclut un polymère de silicone, de préférence le poly(diméthylsiloxane).

8. Procédé selon la revendication 1, dans lequel au moins une partie desdites colonnes (20) est de forme cylindrique, de forme tronconique, pour converger vers ladite surface inférieure (16) et/ou avec des sections non constantes.

9. Procédé selon la revendication 1, dans lequel ladite surface inférieure (16) de ladite plaque de support cible (10) est évidée.

10. Procédé selon la revendication 9, dans lequel ladite surface inférieure (16) définit partiellement une section évidée définie dans ladite plaque de support cible (10), ladite section évidée (36) étant définie pour loger ledit dispositif cible (30) au sein d'une empreinte de ladite plaque de support cible (10).

11. Procédé selon la revendication 3, dans lequel ladite spectrométrie de masse est destinée à un élément choisi dans le groupe constitué par la spectrométrie de masse MALDI (désorption-ionisation laser assistée par matrice), la spectrométrie de masse SELDI (désorption-ionisation laser amplifiée en surface) et la spectrométrie de masse DIOS (désorption-ionisation sur silicium poreux).

12. Procédé selon la revendication 1, dans lequel au moins une partie desdites colonnes (20) est pourvue d'un filtre (58), d'un milieu de filtration (60), est modifiée chimiquement, est modifiée pour conférer une réactivité à certaines molécules biologiques/chimiques, est modifiée en lui attachant physiquement des entités biologiques/chimiques, est modifiée pour minimiser une liaison spécifique de diverses substances biologiques/chimiques, et/ou est modifiée pour se lier spécifiquement à une classe de substances biologiques/chimiques.
